(19) **Europäisches Patentamt**
**European Patent Office**
**Office européen des brevets**

(11) **EP 1 070 980 B1**

(12) **EUROPEAN PATENT SPECIFICATION**

(45) Date of publication and mention
of the grant of the patent:
**26.09.2007 Bulletin 2007/39**

(51) Int Cl.:
*G02F 1/133* (2006.01)    *G09G 3/36* (2006.01)

(21) Application number: **00900140.5**

(22) Date of filing: **07.01.2000**

(86) International application number:
**PCT/JP2000/000038**

(87) International publication number:
**WO 2000/041028 (13.07.2000 Gazette 2000/28)**

(54) **LCD DEVICE, ELECTRONIC DEVICE, AND POWER SUPPLY FOR DRIVING LCD**

LCD-VORRICHTUNG, ELEKTRONISCHES GERÄT UND STROMVERSORGUNG ZUR ANSTEUERUNG DER LCD

DISPOSITIF D'AFFICHAGE A CRISTAUX LIQUIDES, DISPOSITIF ELECTRONIQUE ET ALIMENTATION SERVANT A FAIRE FONCTIONNER LEDIT DISPOSITIF D'AFFICHAGE A CRISTAUX LIQUIDES

(84) Designated Contracting States:
**AT BE CH CY DE DK ES FI FR GB GR IE IT LI LU MC NL PT SE**

(30) Priority: **08.01.1999 JP 291299**

(43) Date of publication of application:
**24.01.2001 Bulletin 2001/04**

(73) Proprietor: **Seiko Epson Corporation**
**Shinjuku-ku**
**Tokyo 163-0811 (JP)**

(72) Inventors:
• **YAMAGUCHI, Hisashi**
**Suwa-shi,**
**Nagano 392-8502 (JP)**

• **YASUE, Tadashi**
**Suwa-shi,**
**Nagano 392-8502 (JP)**

(74) Representative: **Hoffmann, Eckart et al**
**Patentanwalt,**
**Bahnhofstrasse 103**
**82166 Gräfelfing (DE)**

(56) References cited:
**JP-A- 6 214 527      JP-A- 56 065 190**
**JP-A- 56 115 176     US-A- 5 627 547**
**US-A- 5 675 352**

EP 1 070 980 B1

**Description**

TECHNICAL FIELD

The present invention relates to a power supply device for driving liquid crystal, together with a liquid crystal device and electronic equipment which use that power supply device.

BACKGROUND ART

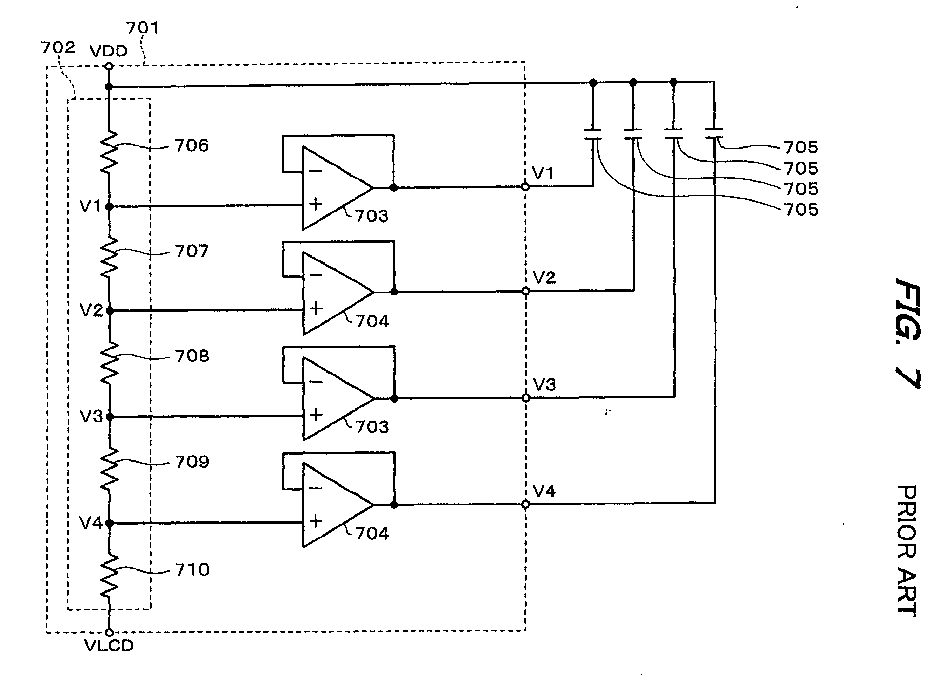

Conventional methods of reducing the required current for a power supply device which is used for driving liquid crystal have been disclosed in Japanese Patent Applications Laid-open No. 6-324640, No. 7-98577, No. 9-43568, and the like. An example of a conventional power supply device for driving liquid crystal is shown Figure 7.

A power supply device for driving liquid crystal 701 shown in Figure 7 has a voltage division circuit 702, two first impedance conversion circuits 703, and two second impedance conversion circuits 704.

The voltage division circuit 702 contains resistors 706 to 710 and generates voltages V1 to V4 by dividing a voltage between a source voltage VDD and a reference voltage for driving liquid crystal VLCD.

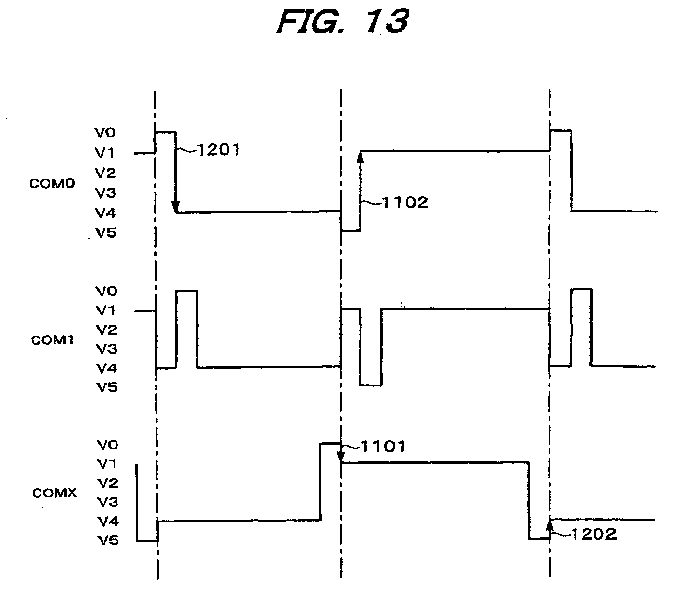

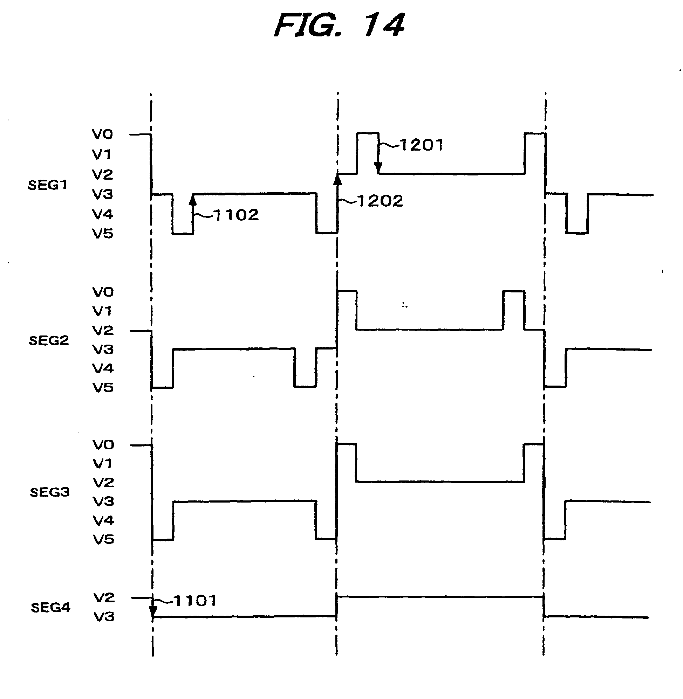

When the source voltage VDD is a voltage V0 and the reference voltage for driving liquid crystal VLCD is a voltage V5, voltages V0 to V5 correspond to voltage levels in the driving waveform for scan electrodes (or common electrodes) COM0, COM1, and COMX shown in Figure 13 and also for signal electrodes (or segment electrodes) SEG1 to SEG4 shown in Figure 14.

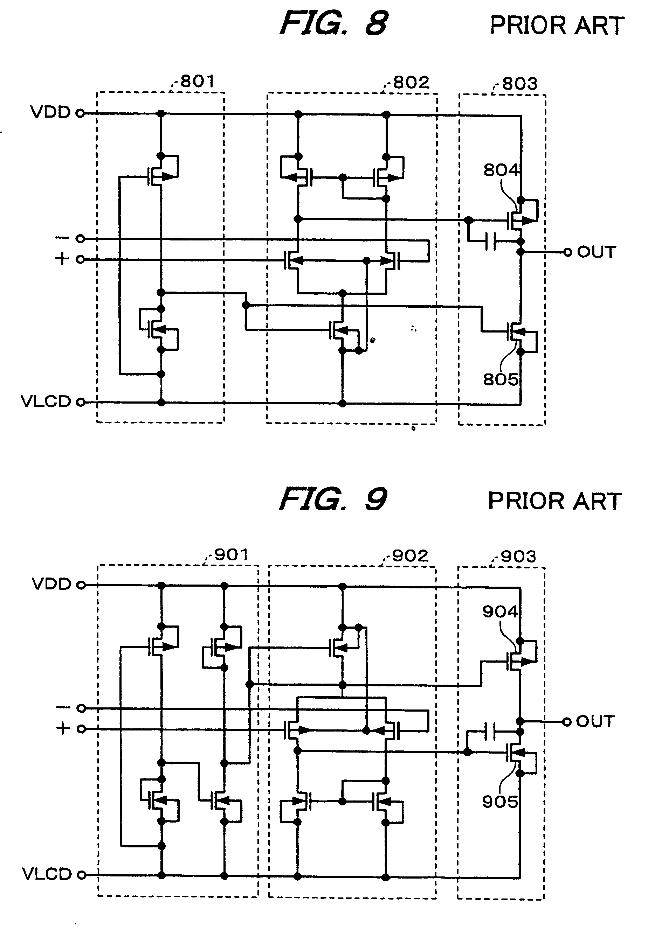

The first impedance conversion circuit 703 is formed by voltage follower connection of an operational amplifier consisting of a constant current circuit 801, P-type differential amplification circuit 802, and output circuit 803 as shown in Figure 8. An N-type transistor 805 in the output circuit 803 forms a current source by receiving a constant bias voltage from the constant current circuit 801, thereby providing a load for the P-type transistor 804.

The characteristics of the first impedance conversion circuits 703 which generate the voltages V1 and V3 are determined by taking into account the direction of movement of electric charges in the scan electrodes (or common electrodes) or the signal electrodes (or segment electrodes) to which the voltage V1 or V2 is applied. Specifically, as indicated by 1102 in Figures 13 and 14, positive charges to be moved from the first impedance conversion circuits 703 to the electrodes is larger in amount than negative charges. For this reason, a P-type transistor 804 which causes a current to flow into the electrodes is used as an active element in the first impedance conversion circuits 703.

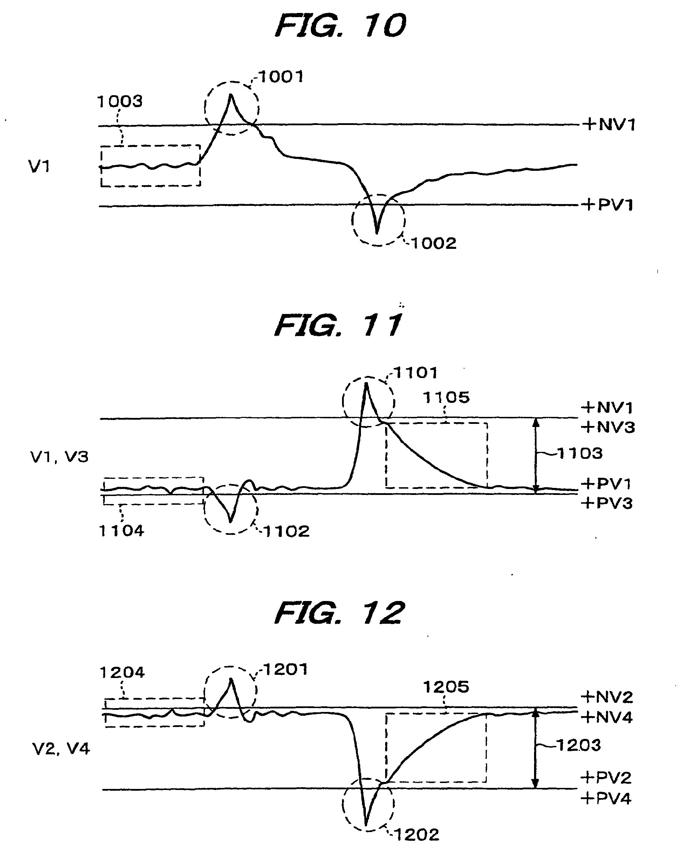

The second impedance conversion circuit 704 is formed by voltage follower connection of an operational amplifier consisting of a constant current circuit 901, N-type differential amplification circuit 902, and output circuit 903 as shown in Figure 9. A P-type transistor 904 in the output circuit 903 forms a current source by receiving a constant bias voltage from the constant current circuit 901, thereby providing a load for the N-type transistor 905.

The characteristics of the second impedance conversion circuits 704 which generate the voltages V2 and V4 are also determined by taking into account the direction of movement of electric charges in the scan electrodes (or common electrodes) or the signal electrodes (or segment electrodes) to which the voltage V2 or V4 is supplied. Specifically, as indicated by 1201 in Figures 13 and 14, negative charges to be moved from the second impedance conversion circuits 704 to the electrodes is larger in amount than positive charges. For this reason, an N-type transistor 905 which causes a current to be drawn from the electrodes is used as an active element in the second impedance conversion circuits 704.

Among the divided voltages V1 to V4 in the voltage division circuit 702, the voltages V1 and V3 are repectively input to the plus terminals of the first impedance conversion circuits 703, and the voltages V2 and V4 are respectively input to the plus terminals of the second impedance conversion circuits 704. The impedance conversion of the voltages V1 to V4 can be carried out in this manner, thereby generating voltages for driving liquid crystal V1 to V4.

Conventional power supply devices for driving liquid crystal use an active load for the output circuit of an impedance conversion circuit to reduce current flowing through loading transistors, thereby reducing required current flowing through the impedance conversion circuit.

For maintaining display quality while limiting the amount of current flowing in the loading transistors through the impedance conversion circuits, the above-described load current must be supplemented. For this reason, it has been required to provide a capacitor element 705 between the output line for each of the voltages V1 to V4 and the output line for the voltage V0 (VDD), as shown in Figure 7. The above load current can be supplemented by discharging the charges from the capacitor element 705.

However, the capacitor element 705 has to be provided outside the power supply device for driving liquid crystal, because the capacitor element 705 has a large volume.

Downsizing and cost reduction are strongly demanded factors for electronic equipment, particularly for portable electronic equipment having a built-in liquid crystal device, so that the display quality is required to be maintained while reducing the number of parts such as capacitor elements.

US 5,675,352 A discloses a power supply device for driving a liquid crystal device which generates N drive voltages between a first and a second reference voltage. The known power supply device comprises: a voltage division circuit which divides the voltage difference between the first and the second reference voltage to generate N pairs of first and second voltages comprising N first voltages, and N second voltages; and N impedance conversion circuits each generating a respective one of said N drive voltages based on a respective one of the N pairs of first and second voltages, wherein the first voltage of said respective pair is higher than said respective drive voltage and the second voltage of said respective pair is lower than said respective drive voltage, with the first voltage in each pair differing from the second voltage. Each of the N impedance conversion circuits comprises a differential amplification circuit arrangement to which a respective one of said N pairs of first and second voltages is input; and an output circuit including a P-type transistor and an N-type transistor connected in series between a first power supply line for the first reference voltage and a second power supply line for the second reference voltage, and having an output terminal which is connected between the P-type transistor and N-type transistor and outputs one of the N drive voltages. The differential amplification circuit arrangement comprises an N-type voltage follower differential amplification circuit which receives the first voltage and applies a first output voltage to a gate of the N-type transistor, and a P-type voltage follower differential amplification circuit which receives the second voltage and applies a second output voltage to a gate of the P-type transistor, such that the on-and-off operation of the N-type transistor is controlled by said first output voltage, and the on-and-off operation of the P-type transistor is controlled by said second output voltage.

The present invention has been devised to solve the above problems and has as an objective therof the provision of a power supply device for driving liquid crystal which enables low current comsumption, together with a liquid crystal device and electronic equipment using such a power supply device.

Another objective of the present invention is to provide a power supply device for driving liquid crystal which enables to omit parts such as a capacitor element while maintaining display quality, together with a liquid crystal device and electronic equipment using such a power supply device.

DISCLOSURE OF THE INVENTION

These objects are achieved by a power supply device as claimed in claim 1. Preferred embodiments of the invention are subject-matter of the dependent claims.

A liquid crystal device including this power supply circuit and electronic equipment using the liquid crystal device are particularly useful for a portable electronic instrument, because of a low current consumption due to prevention of short circuit current from flowing and miniaturization due to elimination of installed parts such as a capacitor element.

BRIEF DESCRIPTION OF THE DRAWINGS

Figure 1    is a circuit diagram of a power supply device for driving liquid crystal.

Figure 2    is a circuit diagram of the voltage division circuit of Figure 1 in which resistors are used.

Figure 3    is a circuit diagram of a modification of the voltage division circuit of Figure 2, wherein the resistors are replaced by variable resistors.

Figure 4    is a circuit diagram showing an example of a circuit which is used in common by the first and second impedance conversion circuits of Figure 1.

Figure 5    is a circuit diagram showing an example of the first impedance conversion circuit of Figure 1 according to an embodiment according to of the present invention.

Figure 6    is a circuit diagram showing an example of the second impedance conversion circuit of Figure 1 according to an embodiment according to of the present invention.

Figure 7    is a circuit diagram showing a conventional power supply device for driving liquid crystal.

Figure 8    is a circuit diagram of the conventional first impedance conversion circuit shown in Figure 7.

Figure 9    is a circuit diagram of the conventional second impedance conversion circuit shown in Figure 7.

Figure 10    is a waveform chart showing an output from the output terminal of the impedance conversion circuit of Figure 4.

Figure 11    is a waveform chart showing an output from the output terminal of the first impedance conversion circuit of Figure 5.

Figure 12    is a waveform chart showing an output from the output terminal of the second impedance conversion circuit of Figure 6.

Figure 13    is a waveform chart showing a liquid crystal driving waveform supplied to the scanning electrodes.

Figure 14    is a waveform chart showing a liquid crystal driving waveform supplied to the signal electrodes.

Figure 15    is a circuit diagram showing a basic configuration of the first and second impedance conversion circuits of Figure 1.

Figure 16    is a circuit diagram showing a modification of the impedance conversion circuit of Figure 15 having the same voltage as the first and second voltages.

Figure 17    is a characteristic chart showing the characteristics of a CMOS inverter.

Figure 18    is a characteristic chart showing an example of the ON-OFF characteristics of P-type and N-type transistors in the output circuit of the power supply device for driving liquid crystal in accordance with the embodiment of the present invention.

Figure 19    is a block diagram of a liquid crystal device according to the embodiment of the present embodiment.

BEST MODE FOR CARRYING OUT THE INVENTION

An embodiment of the present invention will be explained with reference to the drawings.

(Description of power supply device for driving liquid crystal)

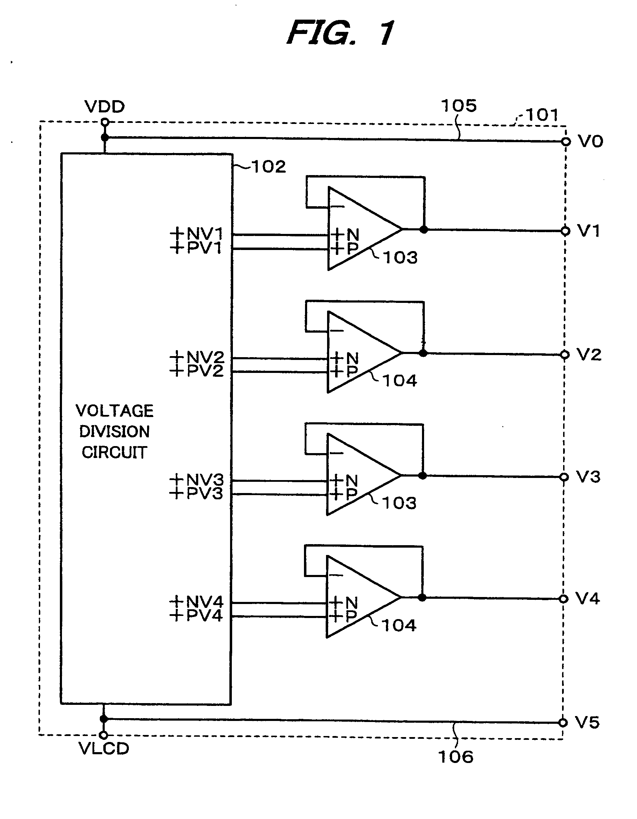

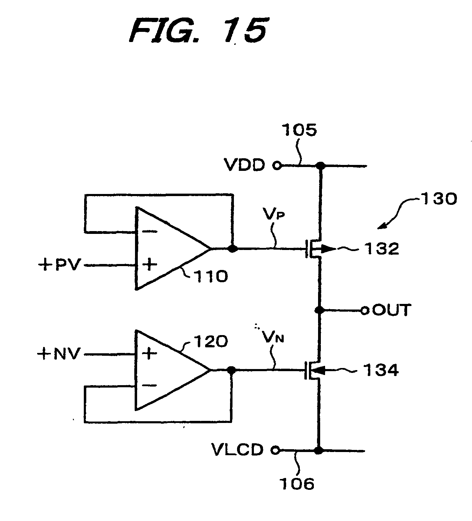

A circuit diagram of a power supply device for driving liquid crystal is shown in Figure 1. The power supply device for driving liquid crystal 101 shown in Figure 1 principally has a voltage division circuit 102, two first impedance conversion circuits 103, and two second impedance conversion circuits 104.
Each of the first and second impedance conversion circuits 103 and 104 basically has a P-type differential amplification circuit 110, N-type differential amplification circuit 120, and an output circuit 130 which is driven by these amplifiers, as shown in Figure 15. Each of the first and second impedance conversion circuits 103, 104 is formed by the voltage follower connection of the minus input terminal and the output terminal respectively of the P-type differential amplification circuit 110 and the N-type differential amplification circuit 120. Voltage (+PV) and voltage (+NV) are independently input to the plus input terminal of the P-type differential amplification circuit and the plus input terminal of N-type differential amplification circuit, respectively. The output circuit 130 has a P-type transistor 132 and N-type transistor 134 which are connected in series between a first power supply line 105 for supplying a source voltage VDD and a second power supply line 106 for supplying a reference voltage for driving liquid crystal VLCD. An output terminal OUT is connected to the line between the P-type transistor 132 and N-type transistor 134. The output voltage of the P-type differential amplification circuit 110 is applied to the gate of the P-type transistor 132, and the output voltage of the N-type differential amplification circuit 120 is applied to the gate of the N-type transistor 134.
In the voltage division circuit 102, the source voltage VDD (voltage V0) is supplied to the high voltage side and the reference voltage for driving liquid crystal VLCD (voltage V5) is supplied to the low voltage side. Four (N=4) first voltages (+NV1) to (+NV4) and four (N=4) second voltages (+PV1) to (+PV4) are then divisionally generated between the voltages V0 and V5. For instance, a first voltage (+NV1) and a second voltage (+PV1) form a pair of first and second voltages. Therefore, four (N=4) pairs of first and second voltages are generated in the voltage division circuit 102.
A pair of the first and second voltages(+NV1) and (+PV1) are respectively supplied to the +N input terminal and +P input terminal of the first impedance conversion circuit 103 which generates the voltage V1. Another pair of the first and second voltages(+NV2) and (+PV2) is respectively supplied to the +N input terminal and +P input terminal of the second impedance conversion circuit 104 which generates the voltage V2. Further pair of first and second voltages (+NV3) and (+PV3) is respectively supplied to the +N input terminal and +P input terminal of the first impedance conversion circuit 103 which generates the voltage V3. Still further pair of first and second voltages(+NV4) and (+PV4) is respectively supplied to the +N input terminal and +P input terminal of the second impedance conversion circuit 104 which generates the voltage V4. Impedance conversion of the output voltage of the voltage division circuit 102 is performed in this manner and the voltages V1 to V4 are generated.

The potential relationship among the voltages VDD, (+NV1) to (+NV4), (+PV1) to (+PV4), and VLCD is shown by the following expression (1).

$$VDD > (+NV1) > (+PV1) > (+NV2) > (+PV2) > (+NV3) > (+PV3)$$

$$> (+NV4) > (+PV4) > VLCD \qquad\qquad (1)$$

Next, potential difference in each pair of first and second voltages will be described. The objective of providing a potential difference between a pair of first and second voltages is to prevent the maximum short circuit current from flowing between the first and second power supply line 105 and 106 via the P-type and N-type transistors 132 and 134 in the output circuit 130 of Figure 15 by preventing simultaneous turn-on of the P-type and N-type transistors 132 and 134, in order to reduce the electric consumption.

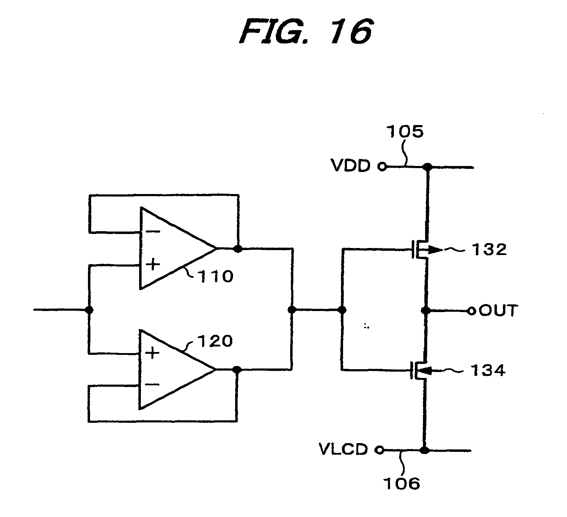

An equivalent circuit which is specially configured such that the output of the P-type differential amplification circuit 110 and the output of the N-type differential amplification circuit 120 have the same voltage is shown in Figure 16. Specifically, the voltages of a pair of first and second voltages to be input to the impedance conversion circuit of Figure 16 are the same. In this case, the output of the P-type differential amplification circuit 110 and the output of the N-type differential amplification circuit 120 are shorted out, and the P-type and N-type transistors 132 and 134 are driven by the same shorted-out voltage.

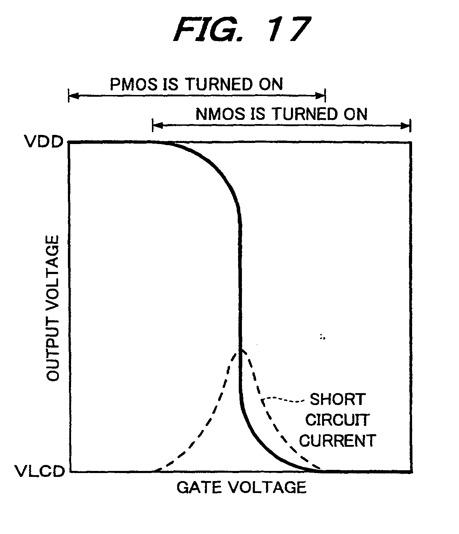

In this time, the P-type and N-type transistors 132 and 134 of Figure 16 have the same characteristics as a known CMOS transistor and exhibit the on-and-off characteristics as shown in Figure 17. According to the characteristics of a CMOS transistor, if the common voltage applied to the gates of the P-type and N-type transistors 132 and 134 is in a given range, the P-type and N-type transistors 132 and 134 are simultaneously turned on and a maximum short circuit current will flow. The objective of the present embodiment is to prevent the flowing of a maximum short circuit current.

In order to prevent simultaneous turn-on of the P-type and N-type transistors 132 and 134 and flowing of a maximum short circuit current, voltages of a pair of the first and second voltages to be input to the impedance conversion circuit should be made different, thereby applying different voltages to the P-type and N-type transistors 132 and 134. This can be achieved by providing an electric potential difference to a pair of first and second voltages to be input to the plus input terminals of the N-type and P-type differential amplification circuits 110 and 120. The reason is that both the P-type and N-type differential amplification circuits 110 and 120 are of a voltage follower type, in which the same voltage as the voltage input to the plus input terminal is available as the output voltage.

In the P-type and N-type differential amplification circuits 110 and 120, an output voltage is not necessarily equivalent to an input voltage. Such a difference is called an offset voltage of a differential amplification circuit (VOFFSET).

It is assumed that the absolute value of the first offset voltage that is a difference between input and output voltages of the N-type differential amplification circuit 110 is represented by |VOFFSETN|, and the absolute value of the second offset voltage that is a difference between input and output voltages of the P-type differential amplification circuit 110 is represented by |VOFFSETP| in the impedance conversion circuit of Figure 15. The first and second offset voltages is either positive or negative, and absolute values of the offset voltages are defined as follows taking the worst case into account.

Taking the first impedance conversion circuit 103 which generates the voltage V1 of Figure 1 as an example, the worst case, in which the potential difference (VN-VP) between the first output voltage VN in the N-type differential amplification circuit 120 to which the first voltage NV is input and the second output voltage VP in the P-type differential amplification circuit 110 to which the second voltage PV is input is zero, will be the following. That is the case where the first output voltage VN of the N-type differential amplification circuit 120 to which the voltage NV1 is input is NV1 - |VOFFSETN|, and the second output voltage VP of the P-type differential amplification circuit 110 to which the voltage PV1 is input is PV1 + |VOFFSETP|.

In this case, if the relationship VN - VP = NV1 - |VOFFSETN| - (PV1 + |VOFFSETP|) > 0 is not satisfied, there is a fear that the P-type and N-type transistors 132 and 134 in the output circuit 130 of Figure 15 forming the first impedance conversion circuit 103 may be simultaneously turned on.

Presuming that the equation |VOFFSETN|+|VOFFSETP| = VOFFSET is satisfied, the conditions under which a short circuit current does not flow are shown by the following expression (2).

$$VOFFSET < (+NV1) - (+PV1) \qquad (2)$$

This can be also applied to the impedance conversion circuits 104 and 104 in Figure 1. In this case, the following expressions must be satisfied.

$$VOFFSET < (+NV2) - (+PV2) \qquad (3)$$

$$VOFFSET < (+NV3) - (+PV3) \qquad (4)$$

$$VOFFSET < (+NV4) - (+PV4) \qquad (5)$$

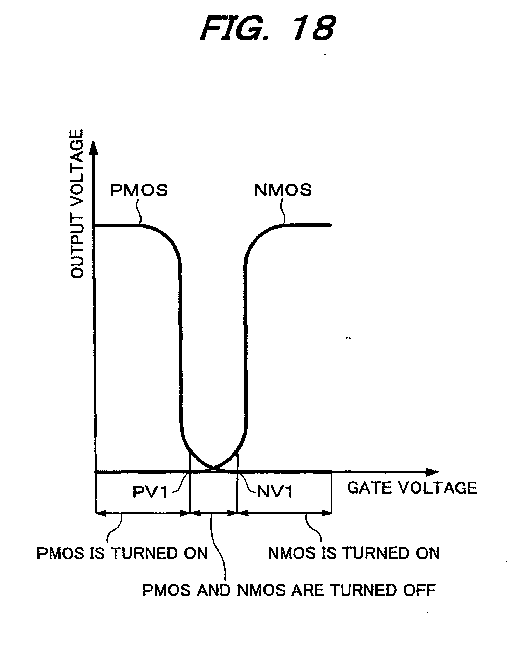

If the relationships of the expressions (2) to (5) are satisfied, it can be prevented that the P-type and N-type transistors 132 and 134 are simultaneously turned on to flow the maximum short circuit current, so that the amount of current consumption can be reduced. Specifically, the on-and-off characteristics of the P-type and N-type transistors 132 and 134 of this embodiment can be implemented as shown in Figure 18.

The potential relationship among the voltages VDD, V1, V2, V3, V4, and VLCD is similar to that in general power supply for driving liquid crystal, ans is shown by the following expression (6).

$$VDD = V0 > V1 > V2 > V3 > V4 > V5 = VCDL \qquad (6)$$

(Voltage division circuit)

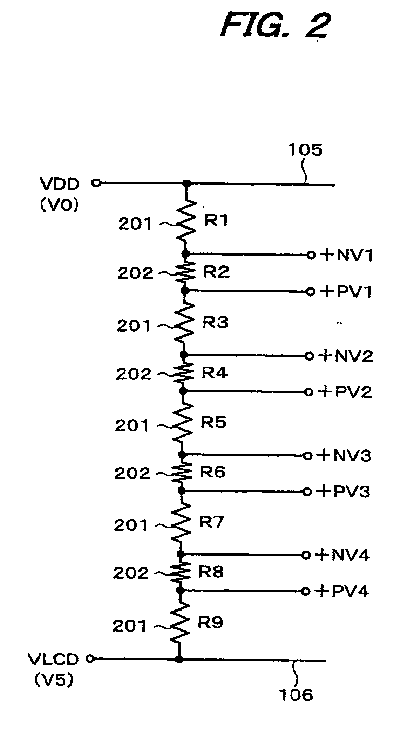

An example of the voltage division circuit 102 of Figure 1 is shown in Figure 2. It comprises five first resistors 201 and four second resistors 202 alternately connected in series between the first power supply line 105 for the source voltage VDD (voltage V0) and the second power supply line 106 for the reference voltage for driving liquid crystal (voltage V5).

The resistances R2, R4, R6, and R8 of the four second resistors 202 are shown by the following expressions (7) and (8), wherein VOP is a voltage between VDD and VLCD, and Rt is the total of the resistances R1 to R9.

$$R2 = R4 = R6 = R8 = Ra \qquad (7)$$

$$Ra = VOFFSET/(VOP/Rt) \qquad (8)$$

The resistances R1, R3, R5, R7 and R9 of the first resistors 201 divide and determine a voltage between the source voltage VDD and the reference voltage for driving liquid crystal VLCD according to the desired bias ratio of the voltage for driving liquid crystal. When the bias ratio of the voltage for driving liquid crystal is 1/5 and the voltages V1 to V4 are (+PV1) to (+PV4), for example, the resistances R1, R3, R5, R7 and R9 of the first resistors 201 are as shown by the following expressions (9) and (10).

$$R1 = R3 = R5 = R7 = Rt/5 - Ra \qquad (9)$$

$$R9 = Rt/5 \qquad\qquad (10)$$

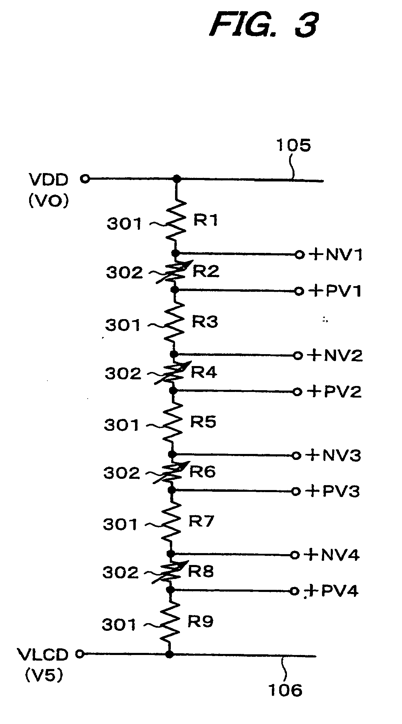

Another example of the voltage division circuit 102 of Figure 1, which comprises five resistors 301 and four variable resistors 302 alternately connected in series between the first and second power supply lines 105, 106, is shown in Figure 3.

The resistances R1, R3, R5, R7 and R9 of the five resistors 301 are as shown in the expressions (9) and (10). If the resistances R2, R4, R6 and R8 of the four variable resistors 302 are variable, variations in the offset voltages due to variations of the semiconductor integrated circuits which occur during manufacture can be absorbed. In this case, resistances R2, R4, R6 and R8 after adjustment must satisfy the above-described expression (7).

(Structure of the first and second impedance conversion circuits)

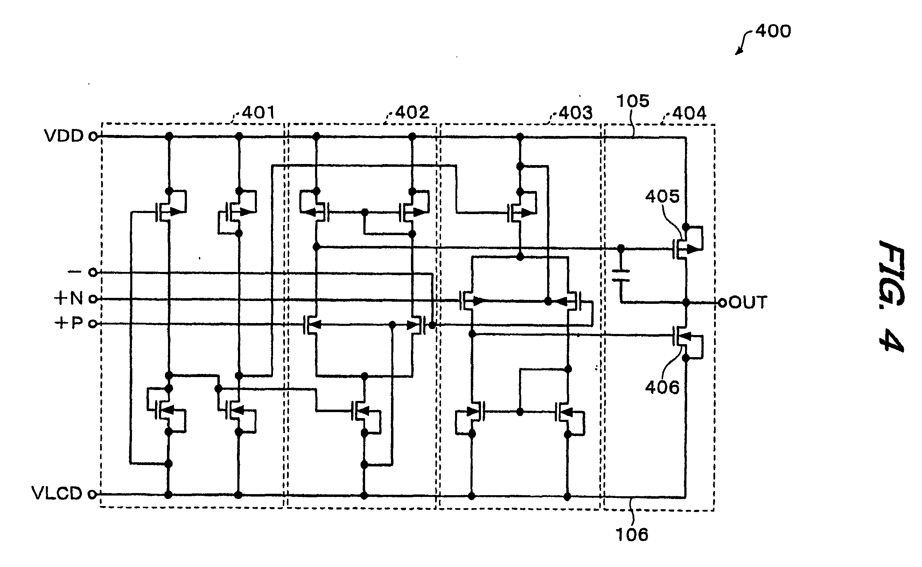

An example of the impedance conversion circuit 400 which is commonly used for the first impedance conversion circuit 103 and the second impedance conversion circuit 104 of Figure 1 is shown in Figure 4.

This impedance conversion circuit 400 has a constant current circuit 401, P-type differential amplification circuit 402, N-type differential amplification circuit 403, and output circuit 404. The output circuit 404 has a P-type transistor 405 and an N-type transistor 406 having a substantially equivalent current drive capability and connected in series between the first and second power supply lines 105 and 106, together with an output terminal OUT being connected between the transistors 405 and 406.

The minus input terminals of the P-type differential amplification circuit 402 and N-type differential amplification circuit 403 are connected to each other, and a pair of first and second voltages are independently applied to the plus input terminals (+N, +P) of these circuits.

The P-type transistor 405 of the output circuit 404 has a gate to which the output voltage of the P-type differential amplification circuit 402 is applied. The source voltage VDD is supplied to the source of the P-type transistor 405. The N-type transistor 406 of the output circuit 404 has a gate to which the output voltage of the N-type differential amplification circuit 403 is applied. The reference voltage for driving liquid crystal VLCD is supplied to the source of the N-type transistor 406. The drains of the P-type transistor 405 and N-type transistor 406 are connected and an output terminal OUT is connected to the connection.

The operation for impedance conversion of the voltage V1 in the impedance conversion circuit 400 of Figure 4 will now be described referring to Figure 10.

An output waveform from the output terminal OUT of the impedance conversion circuit 400 of Figure 4 is shown in Figure 10.

In Figure 10, 1001 shows an operating period of the N-type transistor 406, 1002 shows an operating period of the P-type transistor 405, and 1003 shows a non-operating period in which neither the P-type differential amplification circuit 402 nor the N-type differential amplification circuit 403 is actuated.

In the output circuit 404 of the Figure 4, the output terminal "OUT" is connected by voltage follower connection as shown in Figure 1, whereby the N-type differential amplification circuit 403 causes the N-type transistor 406 to be turned on at a voltage equal to or higher than the input voltage (+NV1) to the +N terminal, and the P-type differential amplification circuit causes the P-type transistor 405 to be turned on at a voltage equal to or lower than the input voltage (+PV1) to the +P terminal.

According to this basic operation, during the non-operating period 1003 in which neither the P-type transistor 405 nor the N-type transistor 406 is actuated (hereinafter called "off-period"), the voltage V1 between the voltage (+NV1) and voltage (+PV1) determined by the voltage follower connection appears at the output terminal OUT, so that the maximum short circuit current can be prevented from flowing through the output circuit 404.

The voltage at the output terminal OUT may increase from the voltage V1 to a level equal to or higher than the voltage (+NV1) due to potential fluctuation at an electrode on the side of a liquid crystal panel to be driven (see 1001 in Figure 10). In this case, since the voltage at the minus input terminal of the impedance conversion circuit 400 increases, the output voltage of the N-type differential amplification circuit 403 also increases, and thus the N-type transistor 406 is turned on. As a result, the voltage at the output terminal OUT is decreased to a level equal to or lower than (+NV1) (the state of 1001 in Figure 10).

When the voltage at the output terminal OUT becomes equal to the input voltage (+NV1) of the +N terminal, the N-type transistor 406 is turned off and the voltage converges to the voltage V1 between the voltages NV1 and PV1.

By contrast, there may be the occasion where the voltage at the output terminal OUT decreases to a level equal to or lower than the voltage (+PV1) due to potential fluctuation at an electrode on the side of a liquid crystal panel to be driven (see 1002 in Figure 10). In this case, since the voltage at the minus input terminal of the impedance conversion circuit 400 also decreases, the output voltage of the P-type differential amplification circuit 402 also decreases, and thus the P-type transistor 407 is turned on. As a result, the voltage at the output terminal OUT is increased to a level equal to or higher than (+PV1) (the state of 1002 in Figure 10).

When the voltage at the output terminal OUT becomes equal to the input voltage (+PV1) of the +P terminal, the P-type transistor 407 is turned off and the voltage converges to the voltage V1 between the voltages NV1 and PV1.

The basic operation mentioned above also applies to the case where the voltages V2 to V4 are generated.

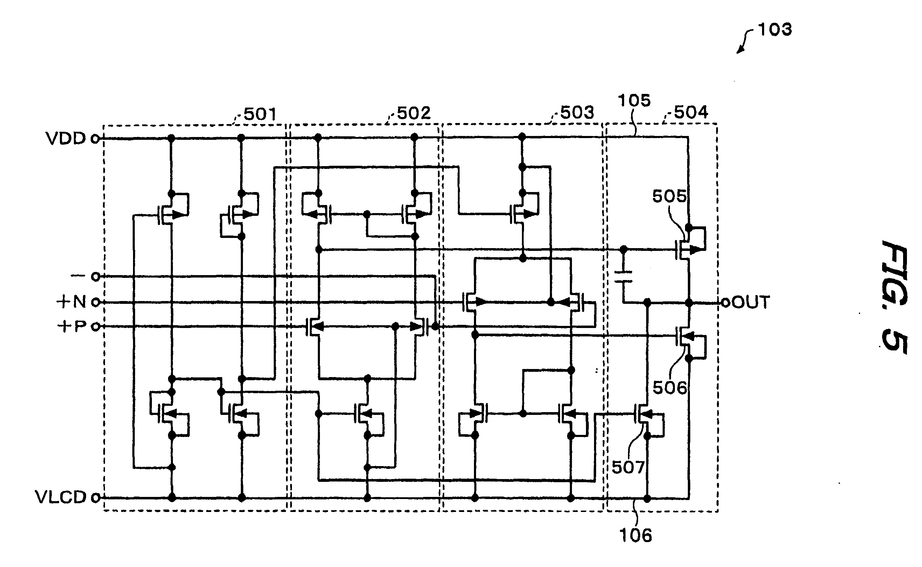

Figure 5 is a circuit diagram showing another example of the first impedance conversion circuit 103 of Figure 1. This first impedance conversion circuit 103 comprises a constant current circuit 501, P-type differential amplification circuit 502, N-type differential amplification circuit 503, and output circuit 504 similar to the impedance conversion circuit 400 of Figure 4. Moreover, the output circuit 504 has the P-type transistor 505 and N-type transistor 506 similar to the impedance conversion circuit 400 of Figure 4. The first impedance conversion circuit 103 differs from the circuit of Figure 4 in that it has an N-type transistor 507 connected between the output terminal OUT and the second power supply line 106. The output voltage of the constant current circuit 501 is applied to the gate of the N-type transistor 507. Note that the N-type transistor 507 is designed so that a constant current is allowed to flow only in an amount as small as possible.

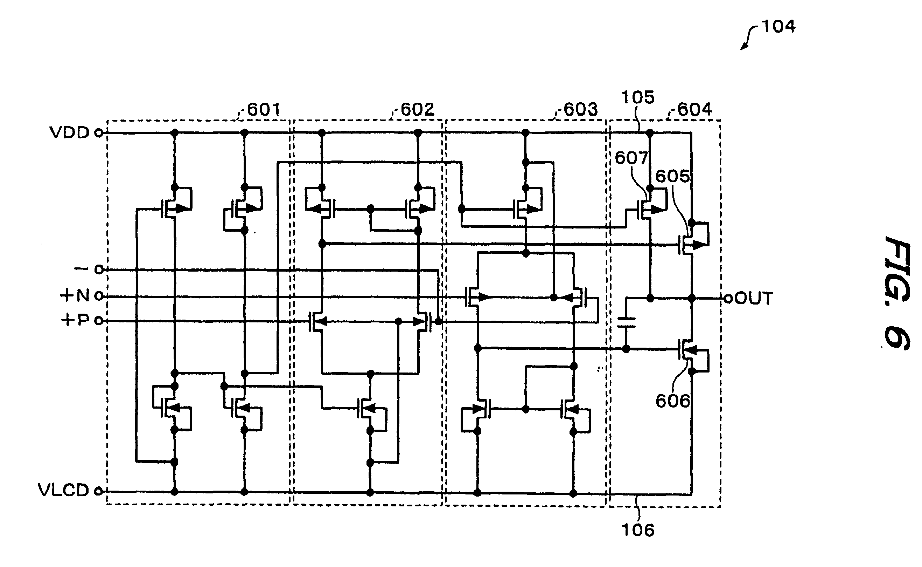

Figure 6 is a circuit diagram showing another example of the second impedance conversion circuit 104 of Figure 2. This second impedance conversion circuit 104 comprises a constant current circuit 601, P-type differential amplification circuit 602, N-type differential amplification circuit 603, and output circuit 604 similar to the impedance conversion circuit 400 of Figure 4. Moreover, the output circuit 604 has the P-type transistor 605 and N-type transistor 606 similar to the impedance conversion circuit 400 of Figure 4. The second impedance conversion circuit 104 differs from the circuit of Figure 4 in that it has a P-type transistor 607 connected between the first power supply line 105 and the output terminal OUT. The output voltage of the constant current circuit 601 is applied to the gate of the P-type transistor 607. Note that the P-type transistor 607 is designed so that a constant current is allowed to flow only in an amount as small as possible.

Next, operation of the circuits shown in Figures 5 and 6 will be described with reference to Figures 11 and 12.

Figure 11 shows an output waveform from the output terminal OUT of the impedance conversion circuit 103 of Figure 5.

In this figure, 1101 shows an operating period of the N-type transistor 506, 1102 shows an operating period of the P-type transistor 505, 1103 shows a non-operating period in which neither the P-type transistor 505 nor the N-type transistor 507 is actuated, 1104 shows an operating period (or a stable period) of the N-type transistor 507 used for a constant current, and 1105 shows an operating period (or a transitional period) of the N-type transistor 507 used for a constant current.

The basic operation of the first impedance conversion circuit 103 of Figure 5 is similar to that of the impedance conversion circuit 400 of Figure 4, except that the N-type transistor 507 of Figure 5 is operated by the output from the constant current circuit 501. Specifically, the N-type transistor 507, which is designed so as to be operated at a constant current as small as possible, is operated during the period 1104 (off-period) in which neither the P-type transistor 505 nor the N-type transistor 506 is in operation. Therefore, the voltage at the output terminal OUT for the first impedance conversion circuit 103 is maintained at the voltage V1 or V3 that is shifted to the side of either the input voltage (+PV1) or the input voltage (+PV3) (the state of 1104 in Figure 11).

The voltage at the output terminal OUT may increase from the voltage V1 or V3 to a level equal to or higher than the voltage (+NV1) or (+NV3) due to potential fluctuation at an electrode on the side of a liquid crystal panel to be driven (see 1101 in Figures 11, 13 and 14). In this case, since the voltage at the minus input terminal of the first impedance conversion circuit 103 increases, the output voltage of the N-type differential amplification circuit 503 also increases, and thus the N-type transistor 506 is turned on. As a result, the voltage at the output terminal OUT is decreased to a level equal to or lower than (+NV1) or (+NV3) (the state of 1101 in Figure 11).

When the voltage at the output terminal OUT becomes equal to the voltage of the input voltage (+NV1) or (+NV3), the N-type transistor 506 is turned off. The voltage at the output terminal OUT further decreases by the operation of the N-type transistor 507, whereby the voltage converges to a voltage approximately equal to the input voltage (+PV1) or (+PV3) (the state of 1105 in Figure 11).

By contrast, there may be the occasion where the voltage at the output terminal OUT decreases to a level equal to or lower than the voltage (+PV1) or (+PV3) due to potential fluctuation at an electrode on the side of a liquid crystal panel to be driven (see 1002 in Figures 11, 13 and 14). In this case, since the voltage at the minus input terminal of the first impedance conversion circuit 103 decreases, the output voltage of the P-type differential amplification circuit 502 also decreases, and thus the P-type transistor 505 is turned on. As a result, the voltage at the output terminal OUT is increased to a level equal to or higher than (+PV1) (the state of 1102 in Figure 11).

When the voltage at the output terminal OUT becomes equal to the input voltage (+PV1) or (+PV3) of the +P terminal, the P-type transistor 505 is turned off. The voltage at the output terminal OUT is maintained at (+PV1) or (+PV3) by the operation of the N-type transistor 507 in the stable period.

Next, operation of the second impedance conversion circuit 104 of Figure 6 will be described with reference to Figure 12. The basic operation of the second impedance conversion circuit 104 of Figure 6 is similar to that of the impedance conversion circuit 400 of Figure 4, except that the P-type transistor 607 is operated by the output from the constant current circuit 601.

The voltage at the output terminal OUT may increase from the voltage V2 or V4 (the state of 1204 in Figure 12) to a level equal to or higher than the voltage (+NV2) or (+NV4) due to potential fluctuation at an electrode on the side of a liquid crystal panel to be driven (see 1201 in Figures 12, 13 and 14). In this case, since the voltage at the minus input terminal of the second impedance conversion circuit 104 increases, the output voltage of the N-type differential amplification circuit 603 also increases, and thus the N-type transistor 606 is turned on. As a result, the voltage at the output terminal OUT is decreased to a level equal to or lower than (+NV2) or (+NV4) (the state of 1201 in Figure 12).

When the voltage at the output terminal OUT becomes equal to the input voltage (+NV2) or (+NV4), the N-type transistor 606 is turned off. Then, the voltage converges to a voltage approximately equal to the input voltage (+PV2) or (+PV4) by the operation of the P-type transistor 507.

By contrast, there may be the occasion where the voltage at the output terminal OUT decreases to a level equal to or lower than the voltage (+PV2) or (+PV4) due to potential fluctuation at an electrode on the side of a liquid crystal panel to be driven (see 1202 in Figures 12, 13 and 14). In this case, since the voltage at the minus input terminal of the second impedance conversion circuit 104 decreases, the output voltage of the P-type differential amplification circuit 602 also decreases, and thus the P-type transistor 605 is turned on. As a result, the voltage at the output terminal OUT is increased to a level equal to or higher than (+PV2) or (+PV4) (the state of 1202 in Figure 12).

When the voltage at the output terminal OUT becomes equal to the input voltage (+PV2) or (+PV4) of the +P terminal, the P-type transistor 605 is turned off. The voltage at the output terminal OUT is further increased due to the operation of the P-type transistor 607. The voltage at the output terminal OUT is maintained at (+NV2) or (+NV4) by the operation of the P-type transistor 607 in the stable period.

In this manner, the first and second impedance conversion circuits 103 and 104 are operated according to the polarity of charges to be transferred from the impedance conversion circuit to an electrode which is an object to be driven.

(Still other examples of the first and second impedance conversion circuits)

The impedance conversion circuit 400 of Figure 4 can be used as the first impedance conversion circuit 103 or the second impedance conversion circuit 104 of Figure 1 by setting the input voltages to the +N terminal and the +P terminal as follows. The following voltage setting is also applicable to the first and second impedance conversion circuits 103, 104 of Figures 5 and 6.

Taking the case where a bias ratio for the voltage for driving liquid crystal is 1/5 as an example, the voltage in this case is set as follows.

Specifically, in the first impedance conversion circuit 103 of Figure 1 which outputs the voltages V1 and V3, negative charges to be moved from the electrodes to be driven to the first impedance conversion circuits 103 is larger in amount than positive charges to be moved from the electrodes to be driven to the first impedance conversion circuits 103, as indicated by 1101 and 1102 in Figures 13 and 14. This is because the maximum amount of positive charges is equivalent to the potential difference between V0 and V1 or between V2 and V3 (difference of one level) as indicated by 1101, whereas the maximum amount of negative charges is equivalent to the potential difference between V5 and V1 (difference of four levels) as indicated by 1102. The voltage therefore is set so that the following expressions (11) to (14) are satisfied.

$$+PV1 = V1 \qquad\qquad (11)$$

$$+PV3 = V3 \qquad\qquad (12)$$

$$+NV1 - V1 > VOFFSET \qquad\qquad (13)$$

$$+NV3 - V3 > VOFFSET \qquad (14)$$

If the above conditions are satisfied, the voltage of the output terminal OUT for the first impedance conversion circuit 103 converges relatively promptly to the voltage V1 or V3 from the voltage equal to or lower than (+PV1) or (+PV3), thereby reducing the current consumption by the first impedance conversion circuit 103 during the converging process.

On the other hand, in the second impedance conversion circuit 104 of Figure 1 which outputs the voltages V2 and V4, positive charges to be moved from electrodes to be driven to the second impedance conversion circuits 104 is larger in amount than negative charges to be moved from the electrodes to be driven to the second impedance conversion circuits 104, as indicated by 1201 and 1202 in Figures 13 and 14. This is because the maximum amount of negative charges is equivalent to the potential difference between V5 and V2 (difference of three levels) as indicated by 1202, whereas the maximum amount of positive charges is equivalent to the potential difference between V0 and V4 (difference of four levels) as indicated by 1201. The voltage therefore is set so that the following expressions (15) to (18) are satisfied.

$$+NV2 = V2 \qquad (15)$$

$$+NV4 = V4 \qquad (16)$$

$$+PV2 - V2 > VOFFSET \qquad (17)$$

$$+PV4 - V4 > VOFFSET \qquad (18)$$

If the above conditions are satisfied, the voltage at the output terminal OUT for the second impedance conversion circuit 104 converges relatively promptly to the voltage V2 or V4 from the voltage equal to or higher than (+NV1) or (+NV3), thereby reducing the current consumption by the second impedance conversion circuit 104 during the converging process.

Resistances in this case are shown by the above-described expressions (7) and (8), and the following expression (19).

$$R1 + R2 = R3 = R4 + R5 + R6 = R7 = R8 + R9 = Rt/5 \qquad (19)$$

(Liquid crystal device and electronic equipment)

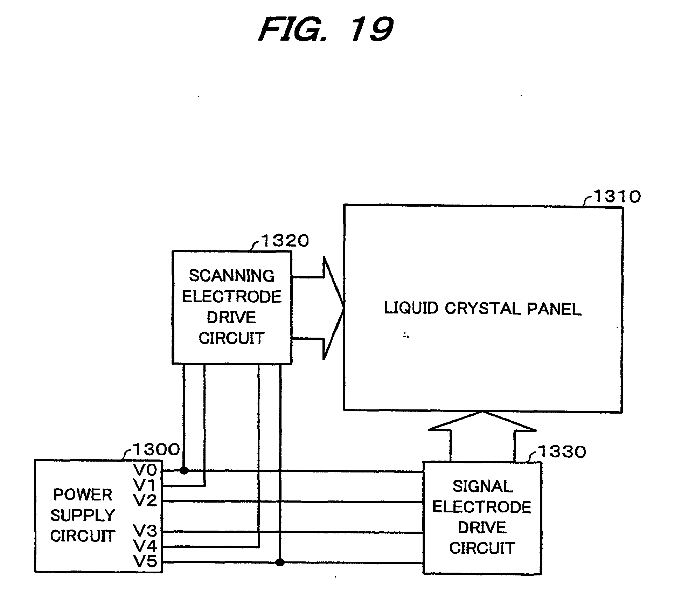

Figure 19 shows a liquid crystal device using the power supply device for driving liquid crystal of the present invention. The liquid crystal device comprises a power supply device for driving liquid crystal 1300 having the structure of Figure 1, a liquid crystal panel 1310 in which scanning electrodes and signal electrodes are formed, a scanning electrode drive circuit 1320 which drives the scanning electrodes based on power supply from the power supply device for driving liquid crystal 1300, and a signal electrode drive circuit 1330 which drives the signal electrodes based on the power supply from the power supply device for driving liquid crystal 1300, for example.

In the case of a simple matrix-type of liquid crystal device, a scanning electrode is called a common electrode and a signal electrode is called a segment electrode. It is needless to mention that the present invention is applicable to other drive systems such as an active matrix-type of liquid crystal device.

Various kinds of electronic equipment using a liquid crystal device as a monitor, projectors using a liquid crystal device as a light bulb, and the like can be given as electronic equipment in which the liquid crystal device of the present invention is used. Due to the low power consumption, the liquid crystal device is particularly useful in various portable electronic instruments such as a portable telephone, a mobile computer, an electronic pocketbook, a game machine, and a video camera equipped with a liquid crystal view-finder and a digital camera.

**Claims**

1. A power supply device for driving a liquid crystal device which generates N liquid crystal drive voltages(V1-V4) between a first and a second reference voltage (VDD,VLCD), the power supply device comprising:

   a voltage division circuit (102) which divides the voltage difference between the first and the second reference voltage (VDD,VLCD) to generate N pairs of first and second voltages comprising N first voltages (NV1-NV4), and N second voltages (PV1-PV4); and
   N impedance conversion circuits (103,104) each generating a respective one of said N drive voltages (V1-V4) based on a respective one of the N pairs of the first and second voltages, wherein the first voltage of said respective pairs is equal to or higher than said respective drive voltages and the second voltage of said respective pair is equal to or lower than said respective drive voltage, with the first voltage in each pair differing from the second voltage;

   wherein each of the N impedance conversion circuits (103,104) comprises:

   a voltage follower type of differential amplification circuit arrangement (110,120) to which a respective one of said N pairs of the first and second voltages is input; and
   an output circuit (130) including a first P-type transistor (132,505,605) and a first N-type transistor (134,506,606) connected in series between a first power supply line (105) for the first reference voltage and a second power supply line(106) for the second reference voltage, and having an output terminal (OUT) which is connected between the first P-type transistor and the first N-type transistor and outputs one of the N liquid crystal drive voltages (V1-V4);
   wherein the differential amplification circuit arrangement comprises an N-type voltage follower differential amplification circuit (120) which receives the first voltage and applies a first output voltage (VN) to a gate of the first N-type transistor (134,506,606); and
   a P-type voltage follower differential amplification circuit (110) which receives the second voltage and applies a second output voltage (VP) to a gate of the first P-type transistor (132,505,605) such that the on-and-off operation of the first N-type transistor (134,506,606) is controlled by the first output voltages (VN) from the differential amplification circuit arrangement, and the on-and-off operation of the first P-type transistor (132,505,605) is controlled by the second output voltage (VP) from the differential amplification circuit arrangement;
   **characterized in that** at least one of the N impedance conversion circuits comprises either
   a second N-type transistor (507) which is connected between the output terminal (OUT) and the second power supply line (106) in parallel with the first N-type transistor (506) of the output circuit (130), the second N-type transistor (507) having a constant bias voltage applied to its gate to provide a constant current, or
   a second P-type transistor (607) which is connected between the first power supply line (105) and the output terminal (OUT) in parallel with the first P-type transistor (605) of said output circuit (130), the second P-type transistor having a constant bias voltage applied to its gate to provide a constant current.

2. The power supply device of claim 1, wherein the second voltage (PV1-PV4) of at least another one of said pairs of first and second voltages is substantially equal to the liquid crystal drive voltage (V1-V4) output by the impedance conversion circuit (103, 104) receiving the respective pair of first and second voltages.

3. The power supply device of claim 1 or 2, wherein each differential amplification circuit arrangement (110, 120) turns on the first N-type transistor (134) when the output voltage at the output terminal is higher than the respective first voltage, turns on the first P-type transistor (132) when the output voltage at the output terminal is lower than the respective second voltage, and turns off both transistors when the output voltage of the output terminal is between the first and second voltages.

4. The power supply device of claim 1, 2 or 3, wherein the current drive capabilities of the first P-type and N-type transistors (132, 134) are substantially equal.

5. The power supply device of any one of claims 1 to 4, wherein the voltage division circuit (102) comprises means (R2, R4, R6, R8) for varying the voltage difference between the first and the second voltage of each pair of first and second voltages.

6. The power supply device of any one of claims 1 to 5, wherein the voltage difference between the first and the second voltage of each pair of first and second voltages is larger than the sum of the absolute value of a first offset voltage between input and output voltages of the N-type differential amplification circuit (120) and the absolute value of a second offset voltage between input and output voltages of the P-type differential amplification circuit (110).

7. The power supply device of any one of the preceding claims, wherein at least one of the N impedance conversion circuits (103, 104) comprises said second N-type transistor (507) and at least another one of the N impedance conversion circuits (103, 104) comprises said second P-type transistor (607).

8. The power supply device as defined in any one of claims 1 to 7, wherein the first voltage of at least one of the N pairs of the first and second voltages is substantially equal to the liquid crystal drive voltage output by the impedance conversion circuit (103, 104) receiving the respective pair of the first and second voltages.

9. A liquid crystal device comprising:

   the power supply device of any one of claims 1 to 8;
   a liquid crystal panel(1310) in which scanning electrodes and signal electrodes are formed;
   a scanning electrode drive circuit (1320) which drives the scanning electrodes based on power supply from said power supply device; and
   a signal electrode drive circuit (1330) which drives the signal electrodes based on the power supply from said power supply device.

10. Electronic equipment comprising the liquid crystal device as defined in claim 9.

**Patentansprüche**

1. Stromversorgungsgerät zum Ansteuern einer Flüssigkristallvorrichtung, welches N Flüssigkristallansteuerspannungen (V1-V4) zwischen einer ersten und einer zweiten Referenzspannung (VDD, VLCD) erzeugt und folgendes aufweist;

   eine Spannungsteilerschaltung (102), welche die Spannungsdifferenz zwischen der ersten und zweiten Referenzspannung (VDD, VLCD) teilt, um N Paare erster und zweiter Spannungen zu erzeugen, die N erste Spannungen (NV1-NV4) und N zweite Spannungen (PV1-PV4) aufweisen; und
   N Impedanzwandlerschaltungen (103, 104), von denen jede eine jeweilige der N Ansteuerspannungen (V1-V4) anhand eines jeweiligen der N Paare erster und zweiter Spannungen erzeugt, wobei die erste Spannung der jeweiligen Paare den jeweiligen Ansteuerspannungen gleicht oder höher ist und die zweite Spannung des jeweiligen Paares gleich oder niedriger ist als die jeweilige Ansteuerspannung, wobei die erste Spannung in jedem Paar sich von der zweiten Spannung unterscheidet;
   wobei jede der N Impedanzwandlerschaltungen (103, 104) eine Differenzverstärkerschaltungsanordnung (110, 120) des Spannungsfolgertyps, in die ein jeweiliges der N Paare erster und zweiter Spannungen eingegeben wird, und
   eine Ausgangsschaltung (130) aufweist, die einen ersten P-leitenden Transistor (132,505,605) und einen ersten N-leitenden Transistor (134,506,606) umfaßt, die zwischen eine erste Stromversorgungsleitung (105) für die erste Referenzspannung und eine zweite Stromversorgungsleitung (106) für die zweite Referenzspannung in Reihe geschaltet sind, und einen Ausgangsanschluß (OUT) haben, der zwischen den ersten P-leitenden Transistor und den ersten N-leitenden Transistor geschaltet ist und eine der N Flüssigkristallansteuerspannungen (V1-V4) ausgibt;
   wobei die Differenzverstärkerschaltungsanordnung eine N-leitende Spannungsfolgerdifferenzverstärkerschaltung (120), welche die erste Spannung empfängt und eine erste Ausgangsspannung (VN) an ein Gate des ersten N-leitenden Transistors (134,506,606) anlegt; und
   eine P-leitende Spannungsfolgerdifferentialverstärkerschaltung (110) aufweist, die die zweite Spannung empfängt und eine zweite Ausgangsspannung (VP) an ein Gate des ersten P-leitenden Transistors (132,505,605) anlegt, so daß der EIN/AUS-Betrieb des ersten N-leitenden Transistors (134,506,606) von der ersten Ausgangsspannung (VN) von der Differentialverstärkerschaltungsanordnung gesteuert wird und der EIN/AUS-Betrieb des ersten P-leitenden Transistors (132,505,605) von der zweiten Ausgangsspannung (VP) Differentialverstärkerschaltungsanordnung gesteuert wird;

**dadurch gekennzeichnet, daß** mindestens eine der N Impedanzwandlerschaltungen entweder

einen zweiten N-leitenden Transistor (507), der zwischen den Ausgangsanschluß (OUT) und die zweite Stromversorgungsleitung (106) parallel zum ersten N-leitenden Transistor (506) der Ausgangsschaltung (130) geschaltet ist, wobei der zweite N-leitende Transistor (507) an seinem Gate eine konstante Vorspannung anliegen hat, um einen konstanten Strom zu liefern, oder

einen zweiten P-leitenden Transistor (607), der zwischen die erste Stromversorgungsleitung (105) und den Ausgangsanschluß (OUT) parallel zum ersten P-leitenden Transistor (605) der Ausgangsschaltung (130) geschaltet ist, wobei der zweite P-leitende Transistor an seinem Gate eine konstante Vorspannung anliegen hat, um einen konstanten Strom zu liefern.

2. Stromversorgungsgerät nach Anspruch 1, bei dem die zweite Spannung (PV1-PV4) mindestens eines anderen der Paare aus erster und zweiter Spannung im wesentlichen der Flüssigkristallansteuerspannung (V1-V4) gleicht, die von der Impedanzwandlerschaltung (103, 104) ausgegeben wird, welche das jeweilige Paar aus erster und zweiter Spannung empfängt.

3. Stromversorgungsgerät nach Anspruch 1 oder 2, bei dem jede Differenzverstärkerschaltungsanordnung (110, 120) den ersten N-leitenden Transistor (134) einschaltet, wenn die Ausgangsspannung am Ausgangsanschluß größer ist als die jeweilige erste Spannung, den ersten P-leitenden Transistor (132) einschaltet, wenn die Ausgangsspannung am Ausgangsanschluß niedriger ist als die jeweilige zweite Spannung, und beide Transistoren ausschaltet, wenn die Ausgangsspannung des Ausgangsanschlusses zwischen der ersten und zweiten Spannung liegt.

4. Stromversorgungsgerät nach Anspruch 1, 2 oder 3, bei dem die Stromansteuerfähigkeiten der ersten P- und N-leitenden Transistoren (132, 134) im wesentlichen gleich sind.

5. Stromversorgungsgerät nach einem der Ansprüche 1 bis 4, bei dem die Spannungsteilerschaltung (102) Mittel (R2, R4, R6, R8) aufweist, welche die Spannungsdifferenz zwischen der ersten und zweiten Spannung jedes Paares aus erster und zweiter Spannung variieren.

6. Stromversorgungsgerät nach einem der Ansprüche 1 bis 5, bei dem die Spannungsdifferenz zwischen der ersten und zweiten Spannung jedes Paares aus erster und zweiter Spannung größer ist als die Summe des absoluten Wertes einer ersten Offsetspannung zwischen Eingangs- und Ausgangsspannungen der N-leitenden Differenzverstärkerschaltung (120) und des absoluten Wertes einer zweiten Offsetspannung zwischen den Eingangs- und Ausgangsspannungen der P-leitenden Differenzverstärkerschaltung (110).

7. Stromversorgungsgerät nach einem der vorhergehenden Ansprüche, bei dem mindestens eine der N Impedanzwandlerschaltungen (103, 104) den zweiten N-leitenden Transistor (507) aufweist, und mindestens eine andere der N Impedanzwandlerschaltungen (103, 104) den zweiten P-leitenden Transistor (607) aufweist.

8. Stromversorgungsgerät nach einem der Ansprüche 1 bis 7, bei dem die erste Spannung mindestens eines der N Paare aus erster und zweiter Spannung im wesentlichen der Flüssigkristallansteuerspannung gleicht, die von der Impedanzwandlerschaltung (103, 104) ausgegeben wird, welche das jeweilige Paar aus erster und zweiter Spannung empfängt.

9. Flüssigkristallvorrichtung, aufweisend:

das Stromversorgungsgerät nach einem der Ansprüche 1 bis 8;
ein Flüssigkristallfeld (1310), in dem Abtastelektroden und Signalelektroden ausgebildet sind;
eine Abtastelektroden-Ansteuerschaltung (1320), welche die Abtastelektroden auf der Grundlage der Stromversorgung von dem Stromversorgungsgerät ansteuert; und
eine Signalelektroden-Ansteuerschaltung (1330), welche die Signalelektroden auf der Grundlage der Stromversorgung von dem Stromversorgungsgerät ansteuert.

10. Elektronisches Gerät, welches die Flüssigkristallvorrichtung gemäß Anspruch 9 aufweist.

**Revendications**

1. Dispositif d'alimentation électrique pour attaquer un dispositif à cristaux liquides qui produit N tensions d'attaque (V1-V4) de cristaux liquides entre des première et deuxième tensions de référence (VDD, VLCD), le dispositif d'alimentation électrique comprenant :

   un circuit (102) de division de tension qui divise la différence de tension entre les première et deuxième tensions de référence (VDD, VLCD) pour produire N paires de première et deuxième tensions comprenant N premières tensions (NV1-NV4) et N deuxièmes tensions (PV1-PV4) ; et
   N circuits (103, 104) de conversion d'impédance produisant chacun l'une, respective, des N tensions d'attaque (V1-V4) sur la base de l'une, respective, des N paires de première et deuxième tensions, la première tension des paires respectives étant égale ou supérieure aux tensions d'attaque respectives et la deuxième tension de la paire respective étant égale ou inférieure à la tension d'attaque respective, la première tension de chaque paire étant différente de la deuxième tension ;

   dans lequel chacun des N circuits (103, 104) de conversion d'impédance comprend :

   un système (110, 120) à circuit d'amplification différentielle du type suiveur de tension, auquel est fournie en entrée l'une respective des N paires de première et deuxième tensions ; et
   un circuit (130) de sortie comprenant un premier transistor (132, 505, 605) de type P et un premier transistor (134, 506, 606) de type N connectés en série entre une première ligne (105) d'alimentation électrique destinée à la première tension de référence et une deuxième ligne (106) d'alimentation électrique destinée à la deuxième tension de référence, et ayant une borne de sortie (OUT) qui est connectée entre le premier transistor de type P et le premier transistor de type N et qui délivre l'une des N tensions (V1-V4) d'attaque de cristaux liquides ;
   dans lequel le système à circuit d'amplification différentielle comprend un circuit (120) d'amplification différentielle suiveur de tension de type N qui reçoit la première tension et applique une première tension (VN) de sortie à une grille du premier transistor (134, 506, 606) de type N ; et
   un circuit (110) d'amplification différentielle suiveur de tension de type P, qui reçoit la deuxième tension et applique une deuxième tension (VP) de sortie à une grille du premier transistor (132, 505, 605) de type P de façon à ce que le fonctionnement passant et non passant du premier transistor (134, 506, 606) de type N soit commandé par la première tension (VN) de sortie du système à circuit d'amplification différentielle, et à ce que le fonctionnement passant et non passant du premier transistor (132, 505, 605) de type P soit commandé par la deuxième tension (VP) de sortie du système à circuit d'amplification différentielle ;

   **caractérisé en ce qu'**au moins l'un des N circuits de conversion d'impédance comprend soit :

   un deuxième transistor (507) de type N qui est connecté entre la borne de sortie (OUT) et la deuxième ligne (106) d'alimentation électrique en parallèle avec le premier transistor (506) de type N du circuit (130) de sortie, le deuxième transistor (507) de type N ayant une tension de polarisation constante appliquée à sa grille pour fournir un courant constant, soit
   un deuxième transistor (607) de type P qui est connecté entre la première ligne (105) d'alimentation électrique et la borne de sortie (OUT) en parallèle avec le premier transistor (605) de type P du circuit (130) de sortie, le deuxième transistor de type P ayant une tension de polarisation constante appliquée à sa grille pour fournir un courant constant.

2. Dispositif d'alimentation électrique suivant la revendication 1, dans lequel la deuxième tension (PV1-PV4) d'au moins une autre des paires de première et deuxième tensions est sensiblement égale à la tension (V1-V4) d'attaque de cristaux liquides délivrée par le circuit (103, 104) de conversion d'impédance recevant la paire respective de première et deuxième tensions.

3. Dispositif d'alimentation électrique suivant la revendication 1 ou 2, dans lequel chaque système (110, 120) à circuit d'amplification différentielle rend passant le premier transistor (134) de type N lorsque la tension de sortie sur la borne de sortie est supérieure à la première tension respective, rend passant le premier transistor (132) de type P lorsque la tension de sortie sur la borne de sortie est inférieure à la deuxième tension respective, et rend non passants les deux transistors lorsque la tension de sortie de la borne de sortie est comprise entre les première et deuxième tensions.

4. Dispositif d'alimentation électrique suivant la revendication 1, 2 ou 3, dans lequel les capacités d'attaque en courant des premiers transistors (132, 134) de type P et de type N sont sensiblement égales.

**5.** Dispositif d'alimentation électrique suivant l'une quelconque des revendications 1 à 4, dans lequel le circuit (102) de division de tension comprend des moyens (R2, R4, R6, R8) pour faire varier la différence de tension entre les première et deuxième tensions de chaque paire de première et deuxième tensions.

**6.** Dispositif d'alimentation électrique suivant l'une quelconque des revendications 1 à 5, dans lequel la différence de tension entre les première et deuxième tensions de chaque paire de première et deuxième tensions est supérieure à la somme de la valeur absolue d'une première tension de décalage entre les tensions d'entrée et de sortie du circuit (120) d'amplification différentielle de type N et la valeur absolue d'une deuxième tension de décalage entre les tensions d'entrée et de sortie du circuit (110) d'amplification différentielle de type P.

**7.** Dispositif d'alimentation électrique suivant l'une quelconque des revendications précédentes, dans lequel au moins l'un des N circuits (103, 104) de conversion d'impédance comprend le deuxième transistor (507) de type N et dans lequel au moins un autre des N circuits (103, 104) de conversion d'impédance comprend le deuxième transistor (607) de type P.

**8.** Dispositif d'alimentation électrique suivant l'une quelconque des revendications 1 à 7, dans lequel la première tension d'au moins l'une des N paires de première et deuxième tensions est sensiblement égale à la tension d'attaque de cristaux liquides délivrée par le circuit (103, 104) de conversion d'impédance recevant la paire respective des première et deuxième tensions.

**9.** Dispositif à cristaux liquides, comprenant :

le dispositif d'alimentation électrique suivant l'une quelconque des revendications 1 à 8 ;
un panneau (1310) à cristaux liquides dans lequel sont formées des électrodes de balayage et des électrodes de signal ;
un circuit (1320) d'attaque d'électrodes de balayage qui attaque les électrodes de balayage sur la base d'une alimentation électrique provenant du dispositif d'alimentation électrique ; et
un circuit (1330) d'attaque d'électrodes de signal qui attaque les électrodes de signal sur la base de l'alimentation électrique provenant du dispositif d'alimentation électrique.

**10.** Equipement électronique comprenant le dispositif à cristaux liquides suivant la revendication 9.

# FIG. 1

# FIG. 2

# FIG. 3

# FIG. 4

# FIG. 5

# FIG. 6

FIG. 7   PRIOR ART

EP 1 070 980 B1

22

## FIG. 8    PRIOR ART

## FIG. 9    PRIOR ART

## FIG. 10

## FIG. 11

## FIG. 12

# FIG. 13

# FIG. 14

# FIG. 15

# FIG. 16

# FIG. 17

# FIG. 18

# FIG. 19

**EP 1 070 980 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6324640 A
- JP 7098577 A
- JP 9043568 A
- US 5675352 A